# EUROPEAN PATENT SPECIFICATION

(11) **EP 1 488 591 B1**
(45) Date of publication and mention of the grant of the patent: **20.12.2006**
(21) Application number: 02712973.3
(22) Date of filing: 27.03.2002
(51) Int. Cl.: H04L 29/00, G06F 17/30

(54) **SYSTEM AND METHOD FOR MANAGING MESSAGING SERVICES**
SYSTEM UND VERFAHREN ZUM VERWALTEN VON NACHRICHTENDIENSTEN
SYSTEME ET PROCEDE DE GESTION DE SERVICE DE MESSAGES

(43) Date of publication of application: 22.12.2004
(73) Proprietor: First Hop Ltd, 00180 Helsinki (FI)
(72) Inventor: RÖNTYNEN, Mikko, FIN-08700 Virkkala (FI); PULLIAINEN, Erkki, FIN-00920 Helsinki (FI)
(74) Representative: Savela, Antti-Jussi Tapani
(86) International application number: PCT/FI2002/000270
(87) International publication number: WO 2003/081871

(56) References cited:
- EP-A1- 1 130 869
- WO-A1-00/64110
- WO-A1-00/72612
- WO-A1-01/71525
- WO-A1-01/91486
- US-A1- 2001 056 508
- US-B1- 6 373 926

## Description

### Field of the invention

The present invention generally relates to messaging services and new possibilities to deploy a messaging service and after that to control, adjust, and report the use of the messaging service.

### Background of the invention

Messaging-based commercial services available today mainly use the short message service (SMS), the enhanced messaging service (EMS), and the multimedia messaging service (MMS) messages to reach users/ customers. Messaging markets have recently been changed so that the share of person-to-person messaging revenues will decrease and the share of other messaging revenues will increase. For example, messaging revenues related to entertainment and advertisement will probably increase in the next years. Uncontrolled service management requires the implementation of a number of various communication methods between the network operators and the service providers. A service provider may need to use different communication methods with different network operators. A communication method includes more than message routing and an application protocol, such as wireless application protocol (WAP). For example, the SMS centres of different network operators may require different protocols. Using a message router, such as the First Hop message router manufactured by the applicant, can solve the drawback of different communication methods. The message router provides so called messaging connectivity.

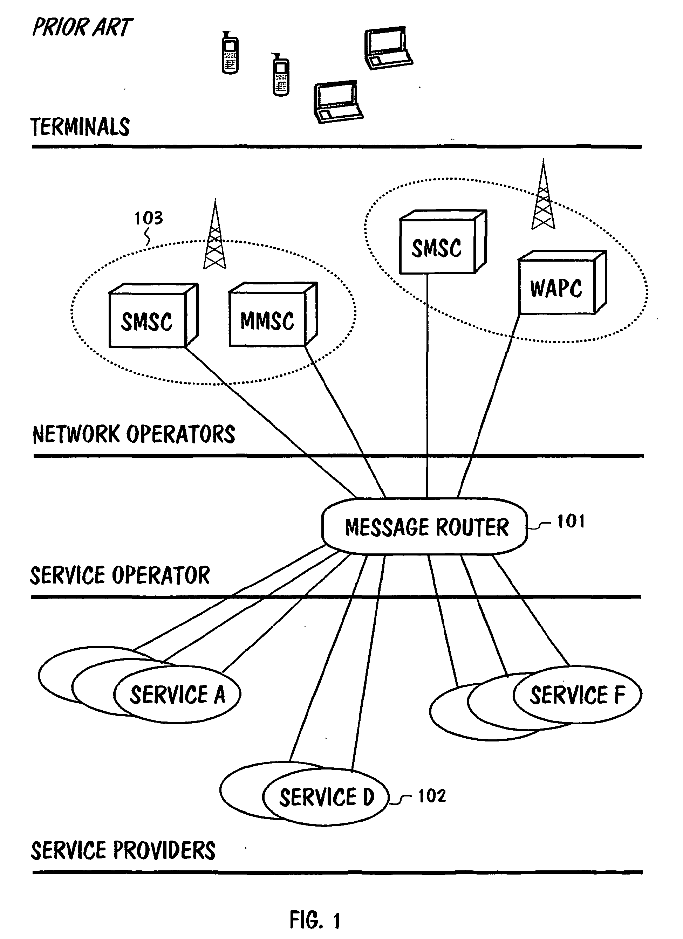

FIG. 1 shows a controlled service management provided by a message router. There are three service providers, one service operator, two network operators, and a set of terminals. The message router 101 of the service operator transmits messages between the services and the network operators, such as a service 102 and a network operator 103. For example, the service 102 can communicate with the SMS centres of both the network operators via the message router. Thus, the service 102 does not need to know SMS center-specific details; it just needs to know one communication method, which it uses with the message router.

A message router implements the messaging connectivity, but the messaging connectivity solves only part of the drawbacks.

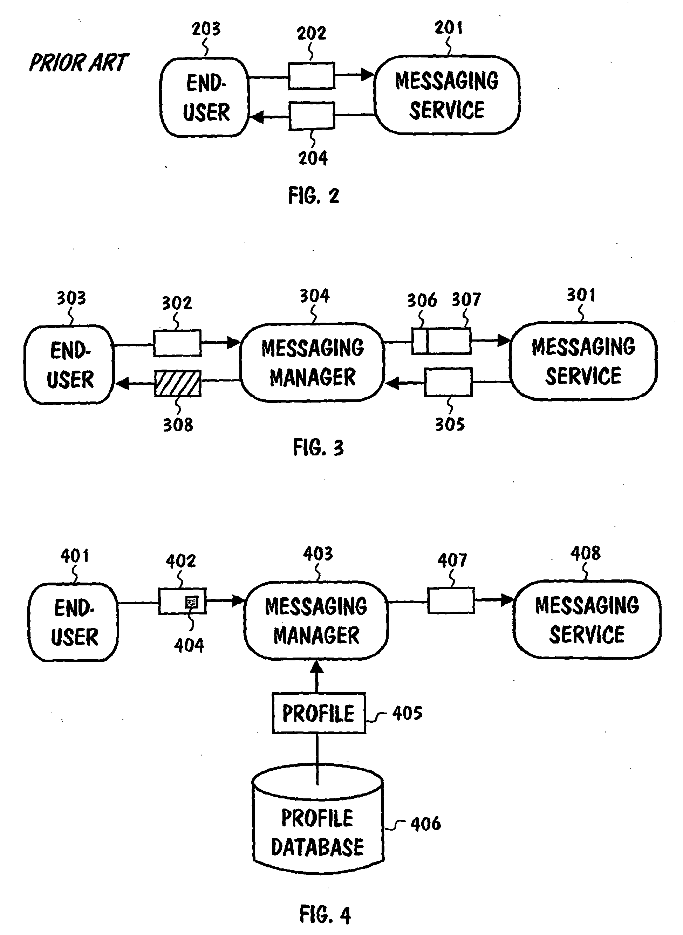

FIG. 2 illustrates the use of a messaging service. The messaging service 201 receives a user message 202 sent by an end-user 203 and as response to the message received, the messaging service 201 sends a response message 204 to the user. The messaging service may include some means for processing messages, but it is uneconomical to implement and update the said means of a number of messaging services.

The applicant's patent application F120011813 concerns processing SMS messages. This 14^{th} of September 2001 filed application teaches that messages must be classified to make the handling of messages possible. The classification can be done by the user or by some administrator. The classification is defined with a special programming tool generated for this purpose. Known programming tools, like editors, and techniques can be used to produce the classification and processing rules. The processing rules define how messages are processed. A processing code implements these processing rules. The processing code may be, for example, executable code or interpretable code, like Java or some scripting language.

In more detail, the classification of messages is based on some characteristics of messages, for example, on sender, length, date, time, or price information of messages. Also the location of a sender can be a criterion of the classification. The classification can also be based on the content of the message, which can be traced by comparing, for example, matching words or bit patterns. The type of the message may as well be one possible basis for the classification. The message can be plain text, sound, picture, data accepted by MMS, some OTA (over-the-air) application or any combination of those mentioned.

The classification affects which processing rules are obeyed, and which processing code is run for a message received. For example, the said message is: 1) rejected or deleted, 2) altered, or 3) directed to other media than the original receiver, e.g. an email or a web site or even to another SMS-gateway, 4) saved to a database, 5) responded to with certain logic or 6) left untouched and transmitted to the receiver. It is also possible to store only the statistical information about the message or the message may be stored for a later transmission.

The patent application F120011813 contains profitable solutions for classifying messages and handling the said messages according to certain processing rules. However, the controlling and managing aspect is poorly observed. For example, a common mechanism for controlling the deployment of a messaging service is missing from the prior art. The deployment includes, among other things, the commissioning tests of a messaging service. Also a common mechanism for authorizing and supporting the use of messaging services is still missing from the prior art.

The main drawbacks of the prior art are listed in the following.

The first drawback is that processes and tools for allowing service providers to test and deploy messaging services are incomplete.

The second drawback is that the billing models and services are inflexible for new innovative services.

The third drawback is a lack of proper business reporting facilities, which increases business risks.

The fourth drawback is an inability to sufficiently control different type of users and their access to services.

The fifth drawback is that operators cannot sufficiently control how the private user data is provided for service providers.

The sixth drawback is that services often fail to take into account different user preferences.

The seventh drawback is that a user often fails to connect to services because of erroneous terminal configurations.

### Summary of the invention

The objective of the invention is to solve the drawbacks of the prior art and define and implement a new type of system for managing messaging services. The said system is termed a "messaging manager".

The messaging manager has five main tasks: service provider management, service management, user management, customer care management, and managing the quality of service.

Service provider management comprises rules and functions related to the service set of a service provider, routing and billing options, and limitations which a service operator set for the service set.

Service management comprises the service deployment through a well-defined process, routing and billing settings, service interfaces, and access control.

User management comprises provisioning of a service through the Internet, WAP or short message service (SMS), logins to the service, user preferences, and terminal specific settings.

Customer care management comprises means for acting on behalf of an end-user. These means are used, for example, when an end-user action has failed for some reason.

Managing the quality of service comprises means for guaranteeing a certain quantity of resources for a service. A service provider can choose the level of the quality of service, or the operator may force a certain level.

These tasks are either performed in the prior art in a service or they are not performed at all. In addition, the messaging manager provides statistics and reports on e.g. the usage volumes of services.

The objective of the invention is achieved by locating the messaging manager between the end-users and services; so that end-users' messages and services' response messages are routed via the messaging manager. The messaging manager is preferably connected to a message router. The most important element of the messaging manager is a profile database that contains profiles for service providers, services, end-users, and customer care. A profile is a data collection that can be created and updated through a user interface, which is most typically a Web interface, and then can be stored in the profile database.

The system is adapted to: 1) receive a message that belongs to a communication between an end-user and a messaging service, 2) obtain data from the message, and when the obtained data is a search key, 3) search at least one profile stored in a profile database by using the search key, wherein a profile is a data collection containing information about either service providers, services, end-users, or customer care, and when found, 4) perform at least one task defined by at least one profile found. When the obtained data is not a search key, the search key is generated by a certain function, which uses the said data as an input.

### Brief description of the drawings

The invention is described more closely with reference to the accompanying drawings, in which
- Figure 1: shows a message router routing messages between services and network operators,
- Figure 2: illustrates the use of a messaging service,
- Figure 3: shows an example of the controlled use of a messaging service through the messaging manager,
- Figure 4: shows the message manager accessing a profile from a profile database and performing a task,
- Figure 5: shows the architecture of the message manager.

### Detailed description of the invention

Messaging manager is a system for managing heterogeneous messaging services. The said messaging services may be based on e.g. SMS, EMS, MMS, or WAP. The messaging manager enables a service operator to run messaging services while having full business control over the service provisioning and service revenues. Maintaining an evolutionary and dynamic set of messaging services is a key for maximizing service revenues. This sets requirements for a rapid, but controlled, service deployment environment. In order to achieve a win-win situation between a service operator and the third party service providers, the messaging services and business models should be flexible and easy to understand and implement. The messaging manager provides a service deployment process improving the time-to-market of messaging services.

FIG. 3 shows an example of the controlled use of a messaging service through the messaging manager. The messaging service, or briefly, the service 301 receives through the messaging manager 304 a user message 302 sent by an end-user 303. As response to the message received the service 301 sends an output message 305 through the messaging manager 304 to the end-user 303. The use of the service 301 is controlled in several ways. For example, the messaging manager checks whether the user is allowed to use the service. In addition, the messaging manager may in someway change the content of the user message. In this example, the messaging manager adds a piece of information 306, in more detail, the user's terminal type, to the user message 302. The input message 307 of the service 301 includes the user message 302 and the piece of information 306. Therefore the user message 302 is not exactly the same as the input message 307 received by the service 301. Correspondingly, the response message 308, which the end-user 303 receives, is not exactly the same message 305 that the service has sent. The contents of the messages 308 and 305 are the same, but the message formats are not, which is symbolized with lineation.

Some services are so called push services in which a service just pushes messages to an end user. A service transaction may be a one-way transaction, in which case an end-user does not respond to the messages. On the other hand, a push service may initiate a service transaction shown in FIG 3. Thus, the service transaction may include transmission of a number of messages to many parties. The said messages may be of one or several message formats, such as SMS or MMS formats.

A message sent by an end-user is termed "a user message". The message that the messaging manager sends to a service is termed "an input message". A message sent by the service is termed "an output message", and the message that the messaging manager sends to the user is termed "a response message".

The messaging manager may send several output messages per one user message and the messaging manager may send several response messages per one output message.

The messaging manager receives user messages and output messages and creates input messages and response messages. The following list concerns the content and format of these messages: 1) the content of a user message may or may not be the same as the content of an input message, 2) a user message may contain more bits than an input message, 3) a user message may contain fewer bits than an input message, 4) the format of a user message may or may not be the same as the format of an input message, 5) the content of a response message may or may not be the same as the content of an output message, 6) a response message may contain more bits than an output message, 7) a response message may contain fewer bits than an output message, 8) the format of a response message may or may not be the same as the format of an output message.

FIG. 4 shows an example of the message manager accessing a profile from a profile database and performing a task. The profiles stored in the profile database are a certain type of data collections. When an end-user 401 wants to use a service 408, he/she sends a message 402 via the messaging manager 403 to the service. The message 402 includes one piece of information that is a search key. The message manager obtains the search key 404 from the user message and accesses a profile 405 from a profiles database 406 by using the search key. After that, the messaging manager performs a task defined in the profile accessed 405. According to the task, the messaging manager sends an input message 407 to the service 408.

In the above example a message included one search key. However, a message may include more than one search key. Each search key is one or more pieces of information located in a message. A search key may be located in the header of a message or in the data part of the message.

A search key may, for example, be the sender or the receiver of the message. Thus, the content of a search key is sometimes the same as in the characteristics of a message described in F120011813. However, a search key is certain data that is intended for searching profiles from a profile database. The characteristics of a message is not necessary usable for searching profiles and it is not intended for that. The characteristics of a message may affect which method is used to obtain a first search key from the message.

It is also possible that a search key is not explicitly defined in the message. Then a certain piece or pieces of information, such as time, date, operator's name etc., are obtained from the message and used as an input to a function, which generates the search key. The information pieces may also be read from one or more profiles. The said function is a specific algorithm for generating search keys. It may be very simple, so that it just concatenates, for example, the first two and last two bytes of the message.

In the next example the function F obtains the message type;, date, and an operator name as input and generates the search key kᵢ :
kᵢ = F(message typeᵢ, date, operator name),
wherein index i refers to the message typeᵢ and a type of the search key kᵢ. There could a certain type of the search key kᵢ for different profiles, such as user profiles, service profiles, service provider profiles, etc. The message type, of received messages may differ from each other. For example, a user message and a service message may be of different types.

To summarize: there are basically three methods to obtain a search key.

The first method is based on reading a predetermined number of bytes starting from a certain byte of a message. For example, a search key is obtained by reading eight bytes starting from the seventh byte of a message.

The second method is based on searching a bit or text pattern from a message, wherein the said pattern determines the location of a search key. For example, the text pattern could be "service provider:" and the search key could be found after this text pattern.

The third method is based on using a function that obtains one or more pieces of information as input and generates a search key.

The type of message may affect which method is used. For example, if the message is a type of extensible mark-up language (XML), the messaging manager could use the second method to obtain a search key from the message.

A profile is a data collection stored in a profile database. Typically, the profile database includes various types of profiles, so that there is an own profile type for service providers, services, end-users, and customer care. It is possible that a database search does not result in any profile. It is also possible that a database search results in several profiles, i.e. the search key used matches several profiles. For example, a search key could be an MSISDN of the sender of a message, and the said search key could match to one user profile and one service profile. The messaging manager performs database searches by using predetermined logic.

A profile may include one or more search keys referring to other profiles, and said profiles may include more search keys. Thus, the profiles may have one-to-one and one-to-many relationships based on search key values. The profiles can be stored in a relation database. The relation database model is a good choice when each profile includes at least one unique search key value.

A profile defines at least one task that the messaging manager should perform. The tasks could be numbered, for example, so that '1' means "direct a message to a receiver's MSISDN" and '2' means "direct a message to a receiver's email address". Thus, if the profile accessed from the database includes '2', the messaging manager directs the message to the receiver's email address. If required, a task may be a running processing code as described in F120011813. However, the processing code is run only if the database search results in a profile that allows the running.

To- summarize: one message may include one or more search keys and each search key may match to none or one, or more profiles, and each profile may define one or more tasks.

The messaging manager is adapted to:
1) receive a message belonging to a communication between an end-user and a messaging service,
2) obtain at least one search key from the message,
3) search at least profile from a profile database by using the search key, wherein the profile database contains information about service providers, services, end-users, and/or customer care, and when found,
4) perform at least one task defined by at least one profile found.

The messaging manager is preferably located on top of a messaging connectivity platform, in more detail, on the top of a message router, such as the First Hop message router.

The messaging manager is equipped with, for example Web-based, user interfaces through which users of different user groups can create and update their profiles. A user must first authorize himself/herself by inputting, for example, a user identifier and a password. After that he/she is allowed to handle profiles. The user groups controlled by the messaging manager are: service operators, service providers, end-users, and customer care personnel.

A service operator can manage its service providers by means of the messaging manager. Each service operator is the "superuser" of its own system and can override all settings made by e.g. a service provider.

Service providers can manage their individual services according to permissions granted by service operators. Service providers can assign routing and billing rules for services. They can also use interrogation means to have reports and statistical information about their services.

Users can access the messaging manager either by using a Web interface, WAP, SMS, MMS, or other messaging technique, and they can provide their terminals with correct settings for service accesses, and subscribe or unsubscribe to services. Users also have access to their preferences and service login information.

Customer care personnel can act on behalf of individual end-users, for example, by setting terminal configurations or by performing the service subscription of an end-user. The customer care personnel are also able to offer a message re-sending capability.

The messaging manager has five main tasks: service provider management, service management, user management, customer care management, and managing the quality of service. These main tasks are discussed in more detail.

**Service Provider Management.** A service operator registers a new service provider by using the messaging manager. In more detail, the service operator creates a profile for the service provider through the Web-based user interface, or another user interface, of the messaging manager. The service operator has a profile for each of its service providers. A service provider profile includes: a billing model, service usage limitations, service deployment rights, routing rules, and/or a choice of MSISDN forwarding.

The billing model sets the billing options for the services of a service provider. A service can set price/tariff information to the messages it sends. The messaging manager sets certain limitations defining how the service is allowed to set the price/tariff information. Alternatively, a service provider obtains a list of price/tariff tags, which the service provider's service can use in its messages and thus demand the messaging manager to set certain price/tariff information to the messages. The messaging manager controls the use of price/tariff tags. For example, if the service provider tries to charge more than it is allowed to, the messaging manager can 1) block the service transaction, 2) block the use of the service, and/or 3) provide a warning for the service or service provider.

Of course, it is also possible that either the message router or the messaging manager takes care of the billing process on behalf of a service.

If required, messages can be charged to a service provider. For example, a message containing an advertisement could be charged to a service provider instead of an end-user. It is also possible to share a charge so that an end-user pays a part of the charge and e.g. an advertiser pays the rest of the charge.

The message router considers the above-mentioned billing options when it creates a CDR (Call Detail Record). The format of the CDR is customizable to match the requirements of a billing mediation system. Another billing method than the method based on CDRs can be used, too.

For example, billing capabilities provided by SMS centers can be used, so that the messaging manager advises the message router to send a billing message to the SMSC. The billing message contains the charging information in a form that is understandable for the SMS center, and thus the SMS center is able to write an appropriate CDR. The end-user may also receive the billing message as a receipt of the ended transaction.

A service provider may be given an option to delegate all or some subset of its rights to another service provider. This is advantageous, if for example, the delegating service provider manages a retail shop chain, and the party to which the rights are delegated manages one of the retail shops.

The service usage limitations are used, for example, to restrict the number of services that the service provider can deploy. In addition, the maximum throughput of a service can be controlled. The throughput is measured, for example, as messages per second, or as the number of messages

Service deployment rights concern the deployment of a service. A right for a SMSC simulator test permits a service provider to deploy a service, but only for testing it in the SMSC simulator. End-to-end test right means that a service can be deployed for live testing, with a limited number of users. The private usage right means that a service is associated with a whitelist of such MSISDNs that are allowed to use the service. A service provider who has the private usage right can manage its whitelists. Public usage right means that a service is public and available to all users not listed in a blacklist. The service provider maintains the blacklist associated with the service. A service operator may also define that some of its service providers have no service deployment rights. Then the service provider requests the service operator to grant a certain right for a certain service.

Routing rules concern short codes that make the use of a service easier. A service operator may assign a number of unique short codes for a particular service provider. It is also possible to share a short code between service providers. Here, the short code is a specific short telephone number identified and used by SMS centers to differentiate user-to-service messages from user-to-user messages.

MSISDN forwarding means that a service will receive the MSISDN of a sending terminal. Otherwise, a random code will be used instead.

In addition to the options described above, the service operator can maintain system wide black- and white lists of users and services. These access control lists override all the other access control definitions made in a service level or user level.

**Service Management.** As mentioned above, a service operator creates a profile for its service provider. In this way, the service operator can control its service providers. Correspondingly, each service provider manages its individual services by creating a profile for a service. The service provider profile created by the service operator determines which choices and settings the service provider is able to make for a service. A service profile could include, for example: a choice of billing model, an access control list, and a choice of a short code.

In addition, the operator may provide tools for its service provider to create other service providers. Typically, these tools are equipped with a Web interface through which the service provider can input service provider specific information, i.e. the service provider can create and update service provider profiles and, of course, service profiles.

The billing model defines how and to whom the use of a certain service is billed. The billing model may only be one of those mentioned in the service provider profile.

Access control is based on a black list or white list. Different lists can be used in the different deployment phases mentioned above.

A short code is used to route messages. The short code may only be one of those mentioned in the service provider profile.

A service provider promotes a new service through predetermined deployment phases: 1) SMSC simulator tests, 2) end-to-end tests, and after that 3) either private usage or public usage phase. If the SMSC simulator tests are successful, the service provider or the service operator grants the end-to-end test right for the new service.

The service provider's interface provides an access to statistical information concerning the usage of the service provider's services. The statistical information may concern, for example, the number of successful mobile-originated and mobile-terminated messages for a predetermined period of time, or the number of failed messages. The service provider also has access to the log information of end-users.

**User management**. An end-user may access the messaging manager by his/her terminal to subscribe or unsubscribe to a service. The end-user interface is implemented as a Web interface or via SMS. Through these interfaces an end-user can, for example: 1) specify his/her terminal type, 2) order WAP, GPRS or MMS settings to his/her terminal to be able to connect to a service, 3) subscribe/unsubscribe to a service, 4) update his/her MSISDN stored in the whitelist of a service, and 5) access the statistical information of his/her service usage.

When an end-user subscribes to a service, the service creates an end-user profile. The end-user profile includes e.g. an MSISDN, a terminal type, and terminal settings.

The user management can also consider the mutual relationships of end-users, such as a breadwinner-child relationship, or an employee-employer relationship. Profiles may have a mutual hierarchical relationship, wherein the said profiles include some identical piece of information. An end-user profile, which is on a higher level in the hierarchy, limits or replaces the definitions of one or more end-user profiles.

For example, a breadwinner's profile may limit which services the breadwinner's child can use. Thus, when a message sent by the child is received in the messaging manager, the breadwinner's profile is accessed from the database and the permission to use a certain service is checked from the breadwinner's profile.

Another example concerns an employee-employer relationship and sharing messaging charges. An employee and employer have their own profiles. Thus, when the employer's message is received in the messaging manager, the employer's and the employee's profiles are accessed from the database. The employer's profile may define some task that the messaging manager performs. However, a task related to charging is defined in the employee's profile.

For example, an employer could pay for a service during working hours, and outside working hours the employee should pay for the service. A good example of such a service would be an SMS-based parking payment service, i.e. during working hours the employer pays the car parking and outside of working hours it is paid by the employee. The decision of how much and who is billed is based on available information, such as date, time, location information, etc.

**Customer care management**. The customer care has means for acting on behalf of an end-user. Customer care does not need to know the password of an end-user to perform the same operation that the end-user is able to do.

If required, customer care can resend a message that an end-user has earlier tried to send to a service. This message and an associated output message of the service are not charged to the end-user.

A service operator or a service provider can define a profile for its own customer care. That customer care profile includes e.g. the employees and passwords of the customer care.

**Managing the quality of service**. The quality of service (Qos) for a messaging system is related to several viewpoints. The main viewpoints are: 1) the throughput defined as messages per a time unit and 2) the maximum response delay for a message sent by an end-user. The time unit could be e.g. a second, an hour, or a month. The maximum response delay is often inversely proportional to throughput.

The messaging manager monitors the resource usage of the messaging system and allocates the resources to services according to their quality of service levels. The quality of service (Qos) level indicates the promised minimum performance, instead of the maximum performance or average performance. The minimum performance is measured as messages per time unit or as the number of messages. For example, the minimum performance is achieved when a certain service has sent a thousand messages.

Monitoring the resource usage of the whole messaging system and its individual services benefits both the service provider and service operator. The service provider monitors the resource usage in order to react to the following two situations.
1) When a service has gained popularity among the end-users, it should be ensured that the said service continually behaves in a satisfactory manner.
2) When the popularity of a service drops and it no longer brings revenues to the service provider, the service should either be taken off or less money should be spent on its QoS level.

Also the service operator monitors the resource usage of services. Then the service operator can purchase, for example, an adequate volume of SMSC center connections based on the resource usage and also based on the QoS levels. For example, if four services have a QoS level that guarantees message throughput of 100 messages per second and the maximum capacity of the messaging system is only 300 messages, a problem occurs if the four services simultaneously use their maximum capacity. To solve this problem the messaging manager is adapted to continuously 1) calculate the resource usage of each service and 2) calculate the sum of the resource usage of services. Thus, the messaging manager detects a possible overload situation. In addition, a Qos level includes a traffic priority.

The traffic priority has the following impact: if the messaging system is overloaded, the services whose QoS includes the highest traffic priority are served first. Relating to the above example, the overload is in practice avoided by allowing a high traffic priority for three of the four services and a low traffic priority for one of the said services. Then the service having the low traffic priority must wait its turn, if the three services use their maximum capacity, 100 messages per second.

The messaging manager is adapted to use two methods for reducing traffic: 1) delaying the processing of a message until the messaging system is no longer overloaded, or 2) deleting the said message. The choice of a method for reducing traffic could be also included in a QoS level.

The quality of service information may be included in profiles, for example, in service provider or service, or user profiles. When the messaging manager accesses a profile from the profile database, it can obtain the required quality of service information from the profile accessed.

To summarize: a Qos level includes at least the promised minimum performance, which is measured, for example, in messages per second. In addition, the QoS level may include the traffic priority and/or the choice of method for reducing traffic. The messaging manager can control that each service obtains the QoS level that the service provider has chosen.

**Architecture of the messaging manager.** The messaging manager and message router are located behind a firewall to eliminate hostile accesses to a messaging system

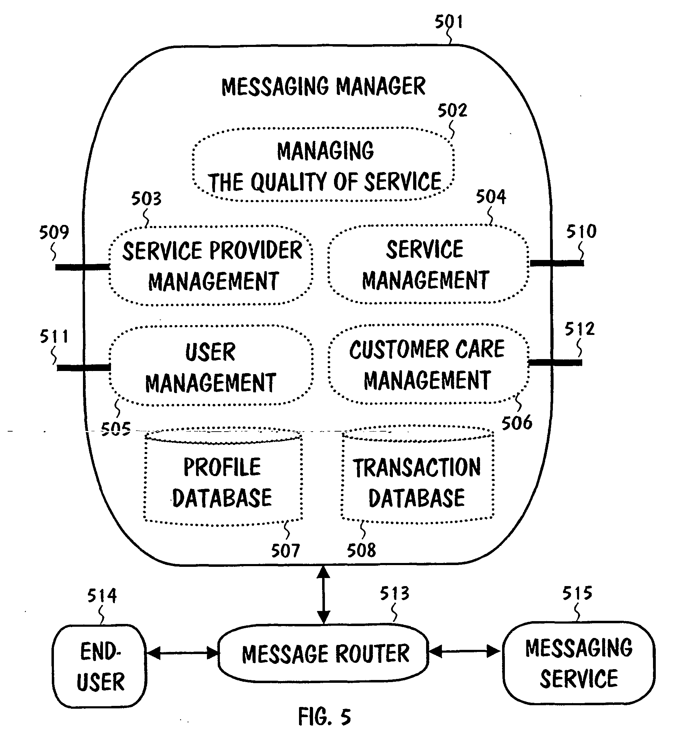

FIG. 5 shows the architecture of the messaging manager. The messaging manager 501 contains: the logic for its five main tasks 502-506, the profile database 507, the transaction database 508, and the user interfaces 509-512. The user interface 509 of the service provider management is intended for a service operator, the user interface 510 of the service management is intended for service providers, the user interface 511 of the user management is intended for end-users, and the user interface 512 of the customer care management is intended for customer care personnel. Through these user interfaces the service operator, service providers, end-users, and customer care personnel can access and modify their profiles stored in the profile database. A message router 513 communicates with an end-user 514 and a messaging service 515. The messaging manager 501 receives messages from end-users and services via the message router 513.

A service operator may register a service provider in the service operator's messaging system. After registering, the service provider can deploy and manage its services. The same applies to end-users, who must first authenticate themselves before they are allowed access to their user profiles.

Typically, each service provider, service, and end-user has its own profile. Customer care may have an individual profile or the customer care information may be included in a service operator profile or service provider profile.

A service provider can customize the user interface intended for its customer care personnel. Furthermore, the service provider may be allowed to implement an external user interface for its end-users.

The messaging manager uses the profile database when one of its service providers aims to deploy a service in a server. From the message manager's point of view it is irrelevant who owns the said server or where it is located, the messaging manager checks from the service provider's profile whether the deployment operation is permissible or not. After a permissible service deployment, the messaging manager uses the profile database to control the usage of the service.

Profile database is also useful, for example, when a service provider wants to customize its service for different types of terminals.

In another embodiment of the invention the messaging manager allows the message router and/or a service to access the profile database. Then the message router can perform certain operations. The messaging manager may allow the service to access the profile database, for example, to include service-specific parameters in end-user profiles.

The messaging manager stores the most recent service transactions initiated by users or messages in the transaction database. The transaction database can be used for several purposes.

First, the messaging manager may access transaction records stored in the transaction database and calculate statistics and form detailed business reports for service operators and service providers.

Secondly, the messaging manager may use transaction records when it guarantees a certain quality of service. In this case, the transaction records are counters for counting the resource usage of services.

Thirdly, the transaction database stores the access history of each user within a specified time period, thus enabling the customer care personnel to quickly react to an unsuccessful user action.

The transaction database may be located in a main memory or in a disk memory. The same applies to the profile database.

## Claims

1. A system for managing a set of messaging services,
**characterized in that** the system comprises a logic for executing main tasks, a profile database, and at least one user interface, and the system is adapted to:
receive a message belonging to a communication between an end-user and a messaging service, wherein the message is sent from either the messaging service or a terminal used by the end-user,
obtain data from the message, and when the data is a search key,
search at least one profile stored in a profile database by using the search key, said profile being a data collection containing information about either service providers, services, end-users, or customer care, and when found,
perform at least one task defined by at least one profile which is found in the profile database and which is created by one of the following parties: a service provider providing the messaging service, a service operator controlling the messaging service, or the customer care acting on behalf of the end-user.

2. The system as described in claim 1, **characterized in that** the system is further adapted to:
generate the search key by using the data as input.

3. The system as described in claim 1, **characterized in that** the message is sent by the end-user.

4. The system as described in claim 1, **characterized in that** the message is sent by the messaging service.

5. The system as described in claim 1, **characterized in that** system is further adapted to:
obtain a second search key from the message,
access a second profile from the profile database by using the second search key, and
perform a second task defined in the second profile.

6. The system as defined in claim 1 and 3, **characterized in that** for performing the task the system is adapted to:
form an input message in accordance with the message received and the profile found,
send the input message to the messaging service, and
receive an output message, which the messaging service sends as response to the input message.

7. The system as defined in claim 6, **characterized in that** for performing the predetermined task the system is further adapted to:
form a response message in accordance with the output message received and the profile found, and
send the response message to the end-user.

8. The system as defined in claim 1, **characterized in that** the system is further adapted to:
send and receive messages via a message router that provides messaging connectivity.

9. The system as defined in claim 1, **characterized in that** system contains logic for at least one of the following main tasks: service provider management, service management, user management, customer care management, and managing the quality of service.

10. The system as defined in claim 9, **characterized in that** the system contains at least one of the following user interfaces: a user interface of the service provider management intended for service operators, a user interface of the service management intended for service providers, a user interface of the user management intended for end-users, or a user interface of the customer care management intended for customer care personnel.

11. The system as defined in claim 10, **characterized in that** as response to a transaction initiated through one of the user interfaces, the system is adapted to add a profile in the profile database.

12. The system as defined in claim 11, **characterized in that** as response to another transaction initiated through one of the user interfaces, the system is adapted to update the said profile.

13. The system as defined in claim 9, **characterized in that** the service provider management is based on profiles, which include at least one of the following pieces of information: alternatives of a billing model, service usage limitations, service deployment rights, routing rules, a choice of a mobile subscribing integrated services digital network (MSISDN) number forwarding.

14. The system as defined in claim 13, **characterized in that** the billing model defines how and to whom the use of a service is billed.

15. The system as defined in claim 13, **characterized in that** the billing model includes a predefined limit, so that when the predefined limit is reached, the system is adapted to perform at least one of the following operation: block the transaction of the service, block the use of the service, or provide a warning.

16. The system as defined in claim 11, **characterized in that** the system is adapted to address a charge relating to said transaction to at least one party defined by a service provider.

17. The system as defined in claim 13, **characterized in that** the alternatives of the billing model contain a list of price/tariff classes which are allowable for a service.

18. The system as defined in claim 13, **characterized in that** the alternatives of the billing model contains a list of price/tariff tags which are allowable for a service.

19. The system as defined in claim 17, **characterized in that** the system is adapted to set price/tariff classes to messages, the price/tariff classes being requested by the service and belonging to said list.

20. The system as defined in claim 10, **characterized in that** the system is adapted to support a service provider to delegate some subset of its rights to another service provider.

21. The system as defined in claim 10, **characterized in that** the system is adapted to support a service provider to create a profile for another service provider.

22. The system as defined in claim 13, **characterized in that** the service usage limitations limit the number of services to be deployed.

23. The system as defined in claim 13, **characterized in that** the service usage limitations limit the maximum throughput of a service.

24. The system as defined in claim 13, **characterized in that** the access control is based on a blacklist that defines illegal end-users of a service.

25. The system as defined in claim 13, **characterized in that** the service deployment rights concern deployment phases: SMSC simulator tests, end-to-end tests, and after that either a private usage or public usage phase.

26. The system as defined in claim 1 and 25, **characterized**
**in that** the task defined by at least one profile found relates to one of the deployment phases.

27. The system as defined in claim 25, **characterized in that** the system contains means for granting the service deployment rights for at least one of the deployment phases.

28. The system as defined in claim 13, **characterized in that** the access control is based on a whitelist that defines legal end-users of a service.

29. The system as defined in claim 13, **characterized in that** the routing rules concern a set of shortcodes addressed to a service provider, a shortcode of the said set being mapped to a certain route, and the service provider being able to map the shortcode to a service.

30. The system as defined in claim 13, **characterized in that** the system is adapted to route a message according to a shortcode of the message.

31. The system as defined in claim 13, **characterized in that** the system is adapted to forward an MSISDN number of a message to a receiver of the message when the MSISDN forwarding is chosen.

32. The system as defined in claim 13, **characterized in that** the system is adapted to execute at least one of the following actions: the billing model, the service usage limitations, the service deployment rights, the routing rules, the choice of an MSISDN number forwarding, wherein said action is initiated through the user interface of the service management and wherein said action is allowable by a service operator.

33. The system as defined in claim 10, **characterized in that** the system is adapted to execute at least one of following actions: specifying a terminal type, ordering settings to a terminal, subscribing/unsubscribing to a service, updating an MSISDN number stored in a whitelist, wherein said action is initiated through the user interface of the user management.

34. The system as defined in claim 9, **characterized in that** profiles intended for the use of end-users have a hierarchical relationship so that a profile, which is higher in the hierarchical relationship, determines what definitions are possible in another profile that is lower in the hierarchical relationship.

35. The system as defined in claim 9, **characterized in that** the system contains means that enable a customer care act on behalf of an end-user.

36. The system as defined in claim 9, **characterized in that** the managing of the quality of service is based on a quality of service (QoS) level which includes at least a minimum performance for a service.

37. The system as defined in claim 36, **characterized in that** the minimum performance is measured as message throughput per time unit.

38. The system as defined in claim 36, **characterized in that** the minimum performance is measured as the number of messages.

39. The system as defined in claim 36, **characterized in that** the QoS level further includes a traffic priority.

40. The system as defined in claim 36, **characterized in that** the QoS level further includes a choice of method for reducing traffic.

41. The system as defined in claim 40, **characterized in that** the system is adapted to reduce the traffic by delaying the processing of a message until the messaging system is no longer overloaded.

42. The system as defined in claim 40, **characterized in that** the system is adapted to reduce the traffic by deleting a message received.

43. The system as defined in claim 36, **characterized in that** the system is adapted to:
calculate the resource usage of each service and
calculate the sum of the resource usage of services.

44. The system as defined in claim 36 and 43, **characterized**
**in that** the system is adapted to determine whether the service has obtained the QoS level.

45. The system as defined in claim 1, **characterized in that** the system is adapted to store a transaction in a transaction database, said transaction being initiated by the message received.

46. The system as defined in claim 10, **characterized in that** the system is adapted to store a transaction in the transaction database, said transaction being initiated through one of the user interfaces.

47. The system as defined in claim 45 and 46, **characterized**
**in that** the system is adapted to:
use the transaction database and
calculate statistics concerning at least one of the following user groups: a service operator, service providers, end-users, customer care.

48. A method for managing the use of a set of messaging services,
**characterized by** the steps of:
receiving a message belonging to a communication between an end-user and a messaging service, wherein the message is sent from either the messaging service or a terminal used by the end-user,
obtaining data from the message, and when the data is a search key,
searching at least one data collection in a set of data collections by using the search key, said set of data collections containing information about either service providers, services, end-users, or customer care, and when found,
performing at least one task defined by at least one data collection which is found in the set of data collections and which is created by one of the following parties: a service provider providing the messaging service, a service operator controlling the messaging service, or the customer care acting on behalf of the end-user.

49. The method as described in claim 48, **characterized by** the further steps of:
generating the search key by using the data as input.

50. The method as described in claim 48, **characterized in that** the message is sent by the end-user.

51. The method as described in claim 48, **characterized in that** the message is sent by the messaging service.

52. The method as described in claim 48, **characterized by** the further steps of:
obtaining a second search key from the message,
accessing a second data collection from the set of data collections by using the second search key, and
performing a second task defined in the second data collection.

53. The method as defined in claim 48 and 50, **character-ized in that** for performing the task the method includes the steps of:
forming an input message in accordance with the message received and the data collection found,
sending the input message to the messaging service, and
receiving an output message which the messaging service sends as response to the input message.

54. The method as defined in claim 53, **characterized in that** for performing the predetermined task the method includes the steps of:
forming a response message in accordance with the output message received and the data collection found, and
sending the response message to the end-user.

## Patentansprüche

1. System zur Verwaltung von Messaging-Diensten,
**dadurch gekennzeichnet, dass** das System eine Logik zur Ausführung von hauptsächlichen Aufgaben, eine Profil-Datenbank und mindestens eine Benutzeroberfläche aufweist, und das System eingerichtet ist auf
das Empfangen einer Nachricht, die zu einer Kommunikation zwischen einem Endbenutzer und einem Messaging-Dienst gehört, wobei die Nachricht entweder vom Messaging-Dienst oder von einem vom Endbenutzer benutzten Endgerät gesendet wird,
das Erhalten von Daten aus der Nachricht, und wenn die Daten aus einem Suchschlüssel bestehen,
das Suchen nach mindestens einem Profil in einer Profildatenbank mit Hilfe des Suchschlüssels, wobei das Profil eine Datensammlung ist, die Information über entweder Dienstprovider, Dienste, Endbenutzer oder Kundendienst enthält, und wenn gefunden,
das Durchführen mindestens einer Aufgabe, die durch mindestens ein Profil definiert ist, welches in der Profil-Datenbank gefunden und von einer der folgenden Parteien erstellt wurde: einem den Messaging-Dienst bereitstellenden Dienstprovider, einem den Messaging-Dienst steuernden Dienstbetreiber oder dem im Namen des Endbenutzers handelnden Kundendienst.

2. System nach Anspruch 1, **dadurch gekennzeichnet, dass** das System ferner darauf eingerichtet ist:
den Suchschlüssel mit Hilfe der Daten als Eingang zu erzeugen.

3. System nach Anspruch 1, **dadurch gekennzeichnet, dass** die Nachricht vom Endbenutzer gesendet wird.

4. System nach Anspruch 1, **dadurch gekennzeichnet, dass** die Nachricht vom Messaging-Dienst gesendet wird.

5. System nach Anspruch 1, **dadurch gekennzeichnet, dass** das System ferner eingerichtet ist auf:
den Erhalt eines zweiten Suchschlüssels aus der Nachricht,
den Zugriff auf ein zweites Profil aus der Profildatenbank mit Hilfe des zweiten Suchschlüssels und
die Durchführung einer zweiten im zweiten Profil definierten Aufgabe.

6. System nach Anspruch 1 und 3, **dadurch gekennzeichnet, dass** zum Durchführen der Aufgabe das System eingerichtet ist auf:
das Bilden einer Eingangsnachricht in Übereinstimmung mit der empfangenen Nachricht und dem gefundenen Profil,
das Senden der Eingangsnachricht an den Messaging-Dienst und
das Empfangen einer Ausgangsnachricht, die der Messaging-Dienst in Antwort auf die Eingangsnachricht sendet.

7. System nach Anspruch 6, **dadurch gekennzeichnet, dass** zur Durchführung der vorherbestimmten Aufgabe das System weiterhin eingerichtet ist auf:
das Bilden einer Antwortnachricht in Übereinstimmung mit der empfangenen Ausgangsnachricht und dem gefundenen Profil und
das Senden der Antwortnachricht an den Endbenutzer.

8. System nach Anspruch 1, **dadurch gekennzeichnet, dass** das System ferner eingerichtet ist auf:
das Senden und Empfangen von Nachrichten über einen Nachrichten-Router, der Messaging-Konnektivität bereitstellt.

9. System nach Anspruch 1, **dadurch gekennzeichnet, dass** das System Logik für mindestens eine der folgenden hauptsächlichen Aufgaben enthält: Dienstprovider-Verwaltung, Dienst-Verwaltung, Benutzer-Verwaltung, Kundendienst-Verwaltung und Verwalten der Dienstgüte.

10. System nach Anspruch 9, **dadurch gekennzeichnet, dass** das System mindestens eine der folgenden Benutzeroberflächen enthält: eine Benutzeroberfläche der Dienstprovider-Verwaltung, die für Dienstbetreiber bestimmt ist, eine Benutzeroberfläche der Dienst-Verwaltung, die für Dienstprovider bestimmt ist, eine Benutzeroberfläche der Benutzer-Verwaltung, die für Endbenutzer bestimmt, oder eine Benutzeroberfläche der Kundendienst-Verwaltung, die für Kundendienstpersonal bestimmt ist.

11. System nach Anspruch 10, **dadurch gekennzeichnet, dass** als Antwort auf eine Transaktion, die über eine der Benutzeroberflächen eingeleitet wurde, das System darauf eingerichtet wird, ein Profil zur Profil-Datenbank hinzuzufügen.

12. System nach Anspruch 11, **dadurch gekennzeichnet, dass** als Antwort auf eine andere Transaktion, die über eine der Benutzeroberflächen eingeleitet wurde, das System darauf eingerichtet wird, das Profil zu aktualisieren.

13. System nach Anspruch 9, **dadurch gekennzeichnet, dass** die Dienstprovider-Verwaltung auf Profilen basiert, die mindestens einen der folgenden Informationsteile aufweisen: Alternativen eines Fakturierungsmodells, Dienstnutzungseinschränkungen, Diensteinsatzrechte, Routing-Regeln, die Wahl zur Weiterleitung einer MSISDN Nummer (MSISDN = Mobile Subscribing Integrated Services Digital Network Number).

14. System nach Anspruch 13, **dadurch gekennzeichnet, dass** das Fakturierungsmodell definiert, wie und wem die Benutzung eines Dienstes in Rechnung gestellt wird.

15. System nach Anspruch 13, **dadurch gekennzeichnet, dass** das Fakturierungsmodell eine vorherbestimmte Grenze aufweist, so dass bei Erreichung der vorherbestimmten Grenze das System darauf eingerichtet ist, mindestens eine der folgenden Operationen durchzuführen: Blockieren der Transaktion des Dienstes, Blockieren der Benutzung des Dienstes, oder Bereitstellen einer Warnung.

16. System nach Anspruch 11, **dadurch gekennzeichnet, dass** das System darauf eingerichtet ist, die auf die Transaktion bezogenen Kosten an mindestens eine Partei zu adressieren, die von einem Dienstprovider definiert wurde.

17. System nach Anspruch 13, **dadurch gekennzeichnet, dass** die Alternativen des Fakturierungsmodells eine Liste von Preis-/Tarifklassen enthalten, die für einen Dienst erlaubt sind.

18. System nach Anspruch 13, **dadurch gekennzeichnet, dass** die Alternativen des Fakturierungsmodells eine Liste von Preis-/Tarif-Kennzeichen enthalten, die für einen Dienst erlaubt sind.

19. System nach Anspruch 17, **dadurch gekennzeichnet, dass** das System darauf eingerichtet ist, Preis-/Tarifklassen für Nachrichten einzurichten, wobei die Preis-/Tarifklassen vom Dienst angefordert werden und zu dieser Liste gehören.

20. System nach Anspruch 10, **dadurch gekennzeichnet, dass** das System darauf eingerichtet ist, einen Dienstprovider darin zu unterstützen, einen Subsatz seiner Rechte an einen anderen Dienstprovider abzutreten.

21. System nach Anspruch 10, **dadurch gekennzeichnet, dass** das System darauf eingerichtet ist, einen Dienstprovider darin zu unterstützen, ein Profil für einen anderen Dienstprovider zu erstellen.

22. System nach Anspruch 13, **dadurch gekennzeichnet, dass** die Dienstnutzungseinschränkungen die Anzahl der einzusetzenden Dienste einschränken.

23. System nach Anspruch 13, **dadurch gekennzeichnet, dass** die Dienstnutzungseinschränkungen den maximalen Durchsatz eines Dienstes einschränken.

24. System nach Anspruch 13, **dadurch gekennzeichnet, dass** die Zugriffskontrolle auf einer "schwarzen Liste" basiert, die illegale Endbenutzer eines Dienstes definiert.

25. System nach Anspruch 13, **dadurch gekennzeichnet, dass** sich die Diensteinsatzrechte auf folgende Einsatzphasen beziehen: SMSC-Simulatortests, Ende-zu-Ende-Tests and danach entweder eine private Nutzungsphase oder eine öffentliche Nutzungsphase.

26. System nach Anspruch 1 und 25, **dadurch gekennzeichnet, dass** die Aufgabe, die von mindestens einem gefundenen Profil definiert wurde, sich auf eine der Einsatzphasen bezieht.

27. System nach Anspruch 25, **dadurch gekennzeichnet, dass** das System Mittel zum Erteilen von Diensteinsatzrechten für mindestens eine der Einsatzphasen enthält.

28. System nach Anspruch 13, **dadurch gekennzeichnet, dass** die Zugriffskontrolle auf einer "weißen Liste" basiert, die legale Endbenutzer eines Dienstes definiert.

29. System nach Anspruch 13, **dadurch gekennzeichnet, dass** sich die Routing-Regeln auf einen Satz von Kurzcodes beziehen, die an einen Dienstprovider adressiert sind, wobei ein Kurzcode des Satzes auf eine bestimmte Route abgebildet ist, und der Dienstprovider fähig ist, den Kurzcode auf einen Dienst abzubilden.

30. System nach Anspruch 13, **dadurch gekennzeichnet, dass** das System darauf eingerichtet ist, eine Nachricht in Übereinstimmung mit einem Kurzcode der Nachricht zu routen.

31. System nach Anspruch 13, **dadurch gekennzeichnet, dass** das System darauf eingerichtet ist, eine MSISDN-Nummer der Nachricht an einen Empfänger der Nachricht weiterzuleiten, wenn MSISDN-Weiterleitung gewählt wird.

32. System nach Anspruch 13, **dadurch gekennzeichnet, dass** das System darauf eingerichtet ist, mindestens eine der folgenden Aktionen auszuführen: das Fakturierungsmodell, die Dienstnutzungseinschränkungen, die Diensteinsatzrechte, die Routing-Regeln, die Wahl zur Weiterleitung einer MSISDN-Nummer, wobei die Aktion über die Benutzeroberfläche der Dienst-Verwaltung eingeleitet wird, und wobei die Aktion für einen Dienstbetreiber erlaubt ist.

33. System nach Anspruch 10, **dadurch gekennzeichnet, dass** das System darauf eingerichtet ist, mindestens eine der folgenden Aktionen auszuführen: Angabe eines Endgerätetyps, Ordnen der Einstellungen für ein Endgerät, Anmelden/Abmelden bei einem Dienst, Aktualisieren einer in einer "weißen Liste" gespeicherten MSISDN-Nummer, wobei die Aktion über die Benutzeroberfläche der Benutzer-Verwaltung eingeleitet wird.

34. System nach Anspruch 9, **dadurch gekennzeichnet, dass** Profile, die zum Einsatz durch Endbenutzer bestimmt sind, eine hierarchische Beziehung aufweisen, so dass ein Profil an höherer Stelle in der hierarchischen Beziehung bestimmt, welche Definitionen in einem anderen Profil an niedrigerer Stelle in der hierarchischen Beziehung möglich sind.

35. System nach Anspruch 9, **dadurch gekennzeichnet, dass** das System Mittel enthält, die einem Kundendienst erlauben, im Namen eines Endbenutzers zu handeln.

36. System nach Anspruch 9, **dadurch gekennzeichnet, dass** das Verwalten einer Dienstgüte auf einem Dienstgüteniveau (QoS) basiert, welches mindestens eine Mindestleistung für einen Dienst beinhaltet.

37. System nach Anspruch 36, **dadurch gekennzeichnet, dass** die Mindestleistung als Nachrichtendurchsatz pro Zeiteinheit gemessen wird.

38. System nach Anspruch 36, **dadurch gekennzeichnet, dass** die Mindestleistung als Anzahl der Nachrichten gemessen wird.

39. System nach Anspruch 36, **dadurch gekennzeichnet, dass** das QoS-Niveau ferner eine Verkehrspriorität beinhaltet.

40. System nach Anspruch 36, **dadurch gekennzeichnet, dass** das QoS-Niveau ferner eine Wahl eines Verfahrens zum Reduzieren des Verkehrs beinhaltet.

41. System nach Anspruch 40, **dadurch gekennzeichnet, dass** das System darauf eingerichtet ist, den Verkehr durch Verzögern der Verarbeitung einer Nachricht zu reduzieren, bis das Messaging-System nicht mehr überlastet ist.

42. System nach Anspruch 40, **dadurch gekennzeichnet, dass** das System darauf eingerichtet ist, den Verkehr durch Löschen einer empfangenen Nachricht zu reduzieren.

43. System nach Anspruch 36, **dadurch gekennzeichnet, dass** das System eingerichtet ist auf
die Berechnung der Ressourcennutzung jedes Dienstes und auf
die Berechnung der Summe der Ressourcennutzung von Diensten.

44. System nach Anspruch 36 und 43, **dadurch gekennzeichnet, dass** das System darauf eingerichtet ist, zu bestimmen, ob der Dienst das QoS-Niveau erreicht hat.

45. System nach Anspruch 1, **dadurch gekennzeichnet, dass** das System darauf eingerichtet ist, eine Transaktion in einer Transaktionsdatenbank zu speichern, wobei die Transaktion durch die empfangene Nachricht eingeleitet wird.

46. System nach Anspruch 10, **dadurch gekennzeichnet, dass** das System darauf eingerichtet ist, eine Transaktion in einer Transaktionsdatenbank zu speichern, wobei die Transaktion durch eine der Benutzeroberflächen eingeleitet wird.

47. System nach Anspruch 45 und 46, **dadurch gekennzeichnet, dass** das System eingerichtet ist auf
die Benutzung der Transaktionsdatenbank und
die Berechnung von Statistiken, die mindestens eine der folgenden Benutzergruppen betreffen: einen Dienstbetreiber, Dienstprovider, Endbenutzer, Kundendienst.

48. Verfahren zur Verwaltung der Benutzung eines Satzes von Messaging-Diensten,
**gekennzeichnet durch** folgende Schritte:
das Empfangen einer Nachricht, die zu einer Kommunikation zwischen einem Endbenutzer und einem Messaging-Dienst gehört, wobei die Nachricht entweder vom Messaging-Dienst oder von einem vom Endbenutzer benutzten Endgerät gesendet wird,
das Erhalten von Daten aus der Nachricht, und wenn die Daten aus einem Suchschlüssel bestehen,
das Suchen nach mindestens einer Datensammlung in einem Satz von Datensammlungen mit Hilfe des Suchschlüssels, wobei der Satz von Datensammlungen Information über entweder Dienstprovider, Dienste, Endbenutzer oder Kundendienst enthält, und wenn gefunden,
das Durchführen mindestens einer Aufgabe, die **durch** mindestens eine Datensammlung definiert ist, welche in dem Satz der Datensammlungen gefunden und von einer der folgenden Parteien erstellt wurde: einem den Messaging-Dienst bereitstellenden Dienstprovider, einem den Messaging-Dienst steuernden Dienstbetreiber oder dem im Namen des Endbenutzers handelnden Kundendienst.

49. Verfahren nach Anspruch 48, **gekennzeichnet durch** folgende weitere Schritte:
Erzeugen des Suchschlüssels **durch** Benutzung der Daten als Eingabe.

50. Verfahren nach Anspruch 48, **dadurch gekennzeichnet, dass** die Nachricht vom Endbenutzer gesendet wird.

51. Verfahren nach Anspruch 48, **dadurch gekennzeichnet, dass** die Nachricht vom Messaging-Dienst gesendet wird.

52. Verfahren nach Anspruch 48, **gekennzeichnet durch** folgende weitere Schritte:
den Erhalt eines zweiten Suchschlüssels aus der Nachricht,
den Zugriff auf eine zweite Datensammlung aus einem Satz von Datensammlungen **durch** Einsatz des zweiten Suchschlüssels und
die Durchführung einer zweiten in der zweiten Datensammlung definierten Aufgabe.

53. Verfahren nach Anspruch 48 und 50, **dadurch gekennzeichnet, dass** zur Durchführung der Aufgabe das Verfahren folgende Schritte beinhaltet:
das Bilden einer Eingangsnachricht in Übereinstimmung mit der empfangenen Nachricht und der gefundenen Datensammlung,
das Senden der Eingangsnachricht an den Messaging-Dienst und
das Empfangen einer Ausgangsnachricht, die der Messaging-Dienst als Antwort auf die Eingangsnachricht sendet.

54. Verfahren nach Anspruch 53, **dadurch gekennzeichnet, dass** zur Durchführung der vorherbestimmten Aufgabe das Verfahren folgende Schritte beinhaltet:
das Bilden einer Antwortnachricht in Übereinstimmung mit der empfangenen Ausgangsnachricht und der gefundenen Datensammlung, und
das Senden der Antwortnachricht an den Endbenutzer.

## Revendications

1. Système pour gérer un ensemble de services de messagerie,
**caractérisé en ce que** le système comprend une logique pour exécuter des tâches principales, une base de données de profils, et au moins une interface utilisateur, et le système est adapté pour :
recevoir un message appartenant à une communication entre un utilisateur final et un service de messagerie, dans lequel le message est envoyé à partir du service de messagerie ou d'un terminal utilisé par l'utilisateur final,
obtenir des données du message, et lorsque les données correspondent à une clé de recherche,
rechercher au moins un profil stocké dans une base de données de profils en utilisant la clé de recherche, ledit profil étant un recueil de données contenant des informations sur les prestataires de services, les services, les utilisateurs finals ou le support client, et lorsqu'il est trouvé,
effectuer au moins une tâche définie par au moins un profil qui est trouvé dans la base de données de profils et qui est créé par l'une des parties suivantes : un prestataire de services fournissant le service de messagerie, un opérateur de services contrôlant le service de messagerie, ou le support client agissant pour le compte de l'utilisateur final.

2. Système selon la revendication 1, **caractérisé en ce que** le système est en outre adapté pour :
générer la clé de recherche en utilisant les données comme entrées.

3. Système selon la revendication 1, **caractérisé en ce que** le message est envoyé par l'utilisateur final.

4. Système selon la revendication 1, **caractérisé en ce que** le message est envoyé par le service de messagerie.

5. Système selon la revendication 1, **caractérisé en ce que** le système est en outre adapté pour :
obtenir une deuxième clé de recherche du message,
accéder à un deuxième profil à partir de la base de données de profils en utilisant la deuxième clé de recherche, et
effectuer une deuxième tâche définie dans le deuxième profil.

6. Système selon les revendications 1 et 3, **caractérisé en ce que** pour effectuer la tâche, le système est adapté pour :
former un message d'entrée en fonction du message reçu et du profil trouvé,
envoyer le message d'entrée au service de messagerie, et
recevoir un message de sortie, que le service de messagerie envoie en tant que réponse au message d'entrée.

7. Système selon la revendication 6, **caractérisé en ce que** pour effectuer la tâche prédéterminée, le système est en outre adapté pour:
former un message de réponse en fonction du message de sortie reçu et du profil trouvé, et
envoyer le message de réponse à l'utilisateur final.

8. Système selon la revendication 1, **caractérisé en ce que** le système est en outre adapté pour :
envoyer et recevoir des messages par l'intermédiaire d'un routeur de messages qui assure la connectivité de messagerie.

9. Système selon la revendication 1, **caractérisé en ce que** le système contient une logique pour au moins l'une des tâches principales suivantes : gestion de prestataire de services, gestion de services, gestion d'utilisateur, gestion de support client et gestion de qualité de service.

10. Système selon la revendication 9, **caractérisé en ce que** le système contient au moins l'une des interfaces utilisateurs suivantes : une interface utilisateur de la gestion de prestataire de services destinée aux opérateurs de services, une interface utilisateur de la gestion de services destinée au prestataire de services, une interface utilisateur de la gestion d'utilisateur destinée aux utilisateurs finals, ou une interface utilisateur de la gestion de support client destinée au personnel de support client.

11. Système selon la revendication 10, **caractérisé en ce que** en réponse à une transaction initiée à travers l'une des interfaces utilisateurs, le système est adapté pour ajouter un profil dans la base de données de profils.

12. Système selon la revendication 11, **caractérisé en ce que** en réponse à une autre transaction initiée à travers l'une des interfaces utilisateurs, le système est adapté pour actualiser ledit profil.

13. Système selon la revendication 9, **caractérisé en ce que** la gestion de prestataire de services est basée sur des profils, qui comprennent au moins l'une des informations suivantes : des alternatives d'un module de facturation, des limitations d'utilisation de services, des droits de déploiement de services, des règles de routage, un choix de transfert de numéro de réseau numérique à intégration de services d'abonnement mobile (MSISDN).

14. Système selon la revendication 13, **caractérisé en ce que** le modèle de facturation définit comment et à qui l'utilisation d'un service est facturée.

15. Système selon la revendication 13, **caractérisé en ce que** le modèle de facturation comprend une limite prédéfinie de manière à ce que, lorsque la limite prédéfinie est atteinte, le système est adapté pour effectuer au moins l'une des opérations suivantes : bloquer la transaction du service, bloquer l'utilisation du service ou fournir un avertissement.

16. Système selon la revendication 11, **caractérisé en ce que** le système est adapté pour adresser une facturation relative à ladite transaction à au moins une partie définie par un prestataire de services.

17. Système selon la revendication 13, **caractérisé en ce que** les alternatives du modèle de facturation contiennent une liste des catégories de prix/tarifs qui sont admissibles pour un service.

18. Système selon la revendication 13, **caractérisé en ce que** les alternatives du modèle de facturation contiennent une liste des étiquettes de prix/tarifs qui sont admissibles pour un service.

19. Système selon la revendication 17, **caractérisé en ce que** le système est adapté pour fixer des catégories de prix/tarifs à des messages, les catégories de prix/tarifs étant demandées par le service et appartenant à ladite liste.

20. Système selon la revendication 10, **caractérisé en ce que** le système est adapté pour aider un prestataire de services à déléguer un certain sous-ensemble de ses droits à un autre prestataire de services.

21. Système selon la revendication 10, **caractérisé en ce que** le système est adapté pour aider un prestataire de services à créer un profil pour un autre prestataire de services.

22. Système selon la revendication 13, **caractérisé en ce que** les limitations d'utilisation de services limitent le nombre de services à déployer.

23. Système selon la revendication 13, **caractérisé en ce que** les limitations d'utilisation de services limitent la capacité maximale de traitement d'un service.

24. Système selon la revendication 13, **caractérisé en ce que** le contrôle d'accès est basé sur une liste noire qui définit les utilisateurs finals interdits d'un service.

25. Système selon la revendication 13, **caractérisé en ce que** les droits de déploiement de services concernent les phases de déploiement : tests de simulateur SMSC, tests de bout en bout, et après cela soit une phase d'utilisation privée soit une phase d'utilisation publique.

26. Système selon les revendications 1 et 25, **caractérisé en ce que** la tâche définie par au moins un profil trouvé concerne l'une des phases de déploiement.

27. Système selon la revendication 25, **caractérisé en ce que** le système contient des moyens pour octroyer les droits de déploiement de services pour au moins l'une des phases de déploiement.

28. Système selon la revendication 13, **caractérisé en ce que** le contrôle d'accès est basé sur la liste blanche qui définit les utilisateurs finals autorisés d'un service.

29. Système selon la revendication 13, **caractérisé en ce que** les règles d'acheminement concernent un jeu de codes abrégés adressés à un prestataire de services, un code abrégé dudit jeu étant mappé sur un certain acheminement, et le prestataire de services étant capable de mapper le code abrégé sur un service.

30. Système selon la revendication 13, **caractérisé en ce que** le système est adapté pour acheminer un message selon un code abrégé du message.

31. Système selon la revendication 13, **caractérisé en ce que** le système est adapté pour transférer un numéro MSISDN d'un message à un récepteur du message lorsque le transfert MSISDN est choisi.

32. Système selon la revendication 13, **caractérisé en ce que** le système est adapté pour exécuter au moins l'une des actions suivantes : le modèle de facturation, les limitations d'utilisation de services, les droits de déploiement de services, les règles d'acheminement, le choix d'un transfert de numéro MSISDN, dans lequel ladite action est initiée à travers l'interface utilisateur de la gestion de services et dans lequel ladite action est admissible par un opérateur de services.

33. Système selon la revendication 10, **caractérisé en ce que** le système est adapté pour exécuter au moins l'une des actions suivantes : spécifier un type de terminal, ordonner des réglages sur un terminal, s'abonner/se désabonner à un service, actualiser un numéro MSISDN stocké dans une liste blanche, dans lequel ladite action est initiée à travers l'interface utilisateur de la gestion d'utilisateur.

34. Système selon la revendication 9, **caractérisé en ce que** les profils destinés à l'utilisation des utilisateurs finals ont une relation hiérarchique de manière à ce qu'un profil, qui est supérieur dans la relation hiérarchique, détermine quelles définitions sont possibles dans un autre profil qui est inférieur dans la relation hiérarchique.

35. Système selon la revendication 9, **caractérisé en ce que** le système contient des moyens qui permettent à un support client d'agir pour le compte d'un utilisateur final.

36. Système selon la revendication 9, **caractérisé en ce que** la gestion de qualité de service est basée sur un niveau de qualité de service (QoS) qui comprend au moins une performance minimale pour un service.

37. Système selon la revendication 36, **caractérisé en ce que** la performance minimale est mesurée en capacité de traitement de message par unité de temps.

38. Système selon la revendication 36, **caractérisé en ce que** la performance minimale est mesurée en nombre de messages.

39. Système selon la revendication 36, **caractérisé en ce que** le niveau QoS comprend en outre une priorité de trafic.

40. Système selon la revendication 36, **caractérisé en ce que** le niveau QoS comprend en outre un choix de méthodes de réduction de trafic.

41. Système selon la revendication 40, **caractérisé en ce que** le système est adapté pour réduire le trafic en retardant le traitement d'un message jusqu'à ce que le système de messagerie ne soit plus surchargé.

42. Système selon la revendication 40, **caractérisé en ce que** le système est adapté pour réduire le trafic en supprimant un message reçu.

43. Système selon la revendication 36, **caractérisé en ce que** le système est adapté pour:
calculer l'utilisation de ressources de chaque service et
calculer la somme de l'utilisation de ressources des services.

44. Système selon les revendications 36 et 43, **caractérisé en ce que** le système est adapté pour déterminer si le service a obtenu le niveau de QoS.

45. Système selon la revendication 1, **caractérisé en ce que** le système est adapté pour stocker une transaction dans une base de données de transactions, ladite transaction étant initiée par le message reçu.

46. Système selon la revendication 10, **caractérisé en ce que** le système est adapté pour stocker une transaction dans la base de données de transactions, ladite transaction étant initiée par l'une des interfaces utilisateurs.

47. Système selon les revendications 45 et 46, **caractérisé en ce que** le système est adapté pour:
utiliser la base de données de transactions et
calculer des statistiques concernant au moins l'un des groupes d'utilisateurs suivants : opérateurs de services, prestataires de services, utilisateurs finals, support client.

48. Procédé pour gérer l'utilisation d'un ensemble de services de messagerie,
**caractérisé par** les étapes consistant à :
recevoir un message appartenant à une communication entre un utilisateur final et un service de messagerie, dans lequel le message est envoyé du service de messagerie ou d'un terminal utilisé par l'utilisateur final,
obtenir des données du message, et lorsque les données correspondent à une clé de recherche,
rechercher au moins un recueil de données dans un ensemble de recueils de données en utilisant la clé de recherche, ledit ensemble de recueils de données contenant des informations relatives aux prestataires de services, aux services, aux utilisateurs finals, ou au support client, et lorsqu'il est trouvé,
effectuer au moins une tâche définie par au moins un recueil de données qui est trouvé dans l'ensemble de recueils de données et qui est créé par l'une des parties suivantes : un prestataire de service fournissant le service de messagerie, un opérateur de service contrôlant le service de messagerie, ou le support client agissant pour le compte de l'utilisateur final.

49. Procédé selon la revendication 48, **caractérisé en ce qu**'il comprend en outre l'étape consistant à :
générer la clé de recherche en utilisant les données comme entrées.

50. Procédé selon la revendication 48, **caractérisé en ce que** le message est envoyé par l'utilisateur final.

51. Procédé selon la revendication 48, **caractérisé en ce que** le message est envoyé par le service de messagerie.

52. Procédé selon la revendication 48, **caractérisé en ce qu**'il comprend en outre les étapes consistant à :
obtenir une deuxième clé de recherche à partir du message,
accéder à un deuxième recueil de données à partir de l'ensemble de recueils de données en utilisant la deuxième clé de recherche, et
effectuer une deuxième tâche définie dans le deuxième recueil de données.

53. Procédé selon les revendications 48 et 50, **caractérisé en ce que** pour effectuer la tâche, le procédé comprend les étapes consistant à :
former un message d'entrée en fonction du message reçu et du recueil de données trouvé,
envoyer le message d'entrée au service de messagerie, et
recevoir un message de sortie que le service de messagerie envoie en tant que réponse au message d'entrée.

54. Procédé selon la revendication 53, **caractérisé en ce que** pour effectuer la tâche prédéterminée, le procédé comprend les étapes consistant à :
former un message de réponse en fonction du message de sortie reçu et du recueil de données trouvé, et
envoyer le message de réponse à l'utilisateur final.
